Europäisches Patentamt

European Patent Office

Office européen des brevets

(19)

(11) Veröffentlichungsnummer: **0 364 973**
**A2**

## (12) EUROPÄISCHE PATENTANMELDUNG

(21) Anmeldenummer: **89119293.2**

(22) Anmeldetag: **17.10.89**

(51) Int. Cl.⁵: **B60R 16/02**

(30) Priorität: **19.10.88 DE 3835639**

(43) Veröffentlichungstag der Anmeldung:
**25.04.90 Patentblatt 90/17**

(84) Benannte Vertragsstaaten:
**DE ES FR GB IT SE**

(71) Anmelder: **Bayerische Motoren Werke Aktiengesellschaft Patentabteilung AJ-30 Postfach 40 02 40 Petuelring 130 D-8000 München 40(DE)**

(72) Erfinder: **Hohenner, Hans Blumenstrasse 15 D-8000 München 2(DE)**
Erfinder: **Bergmann, Dieter Sebastian-Bauer-Strasse 37a D-8000 München 83(DE)**

(54) **Verfahren zur Ausgabe eines Codesignals für Kraftfahrzeug-Teile und Vorrichtung zur Durchführung des Verfahrens.**

(57) Bei einem Verfahren zur Ausgabe eines Fehlercodes für Kraftfahrzeug-Teile und einer Vorrichtung zur Durchführung des Verfahrens wird eine Glühlampe im Sichtbereich des Fahrzeugbenutzers mit einem Codesignal beaufschlagt, wenn einem zugehörigen elektronischen Steuergerät ein Ausgabe-Befehl zugeleitet wird. Hierzu dient eine serienmäßig vorhandene Einrichtung, die eine Doppelfunktion erhält und in einem besonderen Betriebszustand zur Eingabe des Ausgabe-Befehls für das Codesignal an das elektronische Steuergerät dient.

EP 0 364 973 A2

## Verfahren zur Ausgabe eines Codesignals für Kraftfahrzeug-Teile und Vorrichtung zur Durchführung des Verfahrens.

Die Erfindung bezieht sich auf ein Verfahren nach dem Oberbegriff des Patentanspruchs 1 sowie auf eine Vorrichtung zur Durchführung dieses Verfahrens.

Für einen Kraftfahrzeug-Airbag ist es bekannt, mit Hilfe des Codesignals einen Fehler im und mit Hilfe des zugehörigen elektronischen Steuergeräts auszugeben. Dabei wird auf einen Ausgabe-Befehl hin eine Kontrolleuchte im Kombiinstrument aktiviert. Der Ausgabe-Befehl kann lediglich in einer Werkstätte eingegeben werden. Hierzu ist eine vorbereitende Beschaltung des elektronischen Steuergeräts in definierter Weise mit externen Mitteln erforderlich. Der Fahrzeugbenutzer besitzt damit keine Möglichkeit, sich beispielsweise vor Antritt einer Fahrt selbst vom ordnungsgemäßen Zustand des Airbags zu überzeugen. Es ist lediglich vorgesehen, einen derartigen Zustand durch Aufleuchten der Kontrolleuchte zu signalisieren.

Es wird für den Fahrzeugbenutzer häufig der Wunsch bestehen, selbst zu erkennen, ob und in welchem Maße die Funktionsfähigkeit des Kraftfahrzeug-Teils eingeschränkt ist. Insbesondere bei nicht sicherheitskritischen Kraftfahrzeug-Teilen, wie beispielsweise einem Kataly sator, Teilen der Brennkraftmaschine oder der Beleuchtungsanlage kann es sinnvoll sein, dem Fahrzeugbenutzer anstelle einer einfachen Gut-/Schlecht-Anzeige einen evtl. Fehler differenziert anzuzeigen. Dies kann beispielsweise dadurch geschehen, daß wie an sich bekannt, der Fehler mit Hilfe eines codierten optischen Signals angezeigt wird. Der Code kann dann dazu verwandt werden, den Fehler zu identifizieren und selbst die Entscheidung zu treffen, inwieweit der Betrieb des Kraftfahrzeugs noch möglich bzw. eingeschränkt ist.

Der Erfindung liegt die Aufgabe zugrunde, ein Verfahren der eingangs genannten Art zu schaffen, das on-board eine Bestimmung des Zustands und insbesondere eines Fehlers ermöglicht. Die hierzu verwendeten Mittel sollen kostengünstig sein. Insbesondere soll es möglich sein, den Zustand ohne zusätzliche interne Schalter oder ähnliche Befehlsgeber und ohne vorbereitende externe Manipulationen anzuzeigen.

Die Erfindung löst diese Aufgabe für den verfahrensmäßigen Teil durch die Mittel, die im Kennzeichen des Patentanspruchs 1 angegeben sind.

Wesentlich für die Erfindung ist, daß zur Eingabe des Ausgabe-Befehls ein ohnehin vorhandener Befehlsgeber verwendet wird, der eine Doppelfunktion erhält. In dem einen Betriebszustand, beispielsweise bei laufendem Kraftfahrzeug, besitzt er die konventionelle Funktion. Im anderen Betriebszustand, beispielsweise bei stehender Brennkraftmaschine und geschlossenem Zündstromkreis besitzt er nun eine zweite Funktion. Diese besteht darin, den Ausgabe-Befehl für das Codesignal an das elektronische Steuergerät weiterzugeben. Sinnvoll ist es dabei, als Befehlsgeber eine Einrichtung zu benutzen, die in funktionalem Zusammenhang mit dem elektronischen Steuergerät für das Kraftfahrzeug-Teil ist. Dabei kann es sich im Falle der Beleuchtungsanlage um einen Betätigungsschalter für diese Anlage handeln. Im Falle eines Automatikgetriebes kann der hierfür vorgesehene Betätigungshebel den Ausgabe-Befehl liefern. Im Falle Brennkraftmaschine kann, wie weiter unten noch erläutert, das Fahrwunsch-Pedal( = Gaspedal) diese Funktion übernehmen.

Eine Verbesserung der Erfindung besteht in den Mitteln, die im Patentanspruch 2 angegeben sind. Dadurch wird ein zufälliges und unbeabsichtigtes Auslösen des Codesignals vermieden.

Wie bereits angedeutet, kann die Vorrichtung zur Durchführung des Verfahrens auf unterschiedliche Weise gestaltet sein. Der Ausgabe-Befehl kann mit Hilfe eines geeigneten Befehlsgeber eingegeben werden. Neben den üblichen Betätigungsschaltern bietet sich hier insbesondere das Fahrwunsch-Pedal an. Damit ist es möglich, einen Fehler der Brennkraftmaschine oder eines nachgeschalteten Abgas-Katalysators auszugeben.

Wesentlich hierfür ist, daß dem Pedal ein oder mehrere elektrische Geber zugeordnet sind, die bei einer extremen Stellung des Fahrpedals ansprechen. Beispielsweise gilt dies für den Vollast-Schaltkontakt sowie für einen Leerlauf-Schaltkontakt, der nach Ansprechen des Vollast-Schaltkontakts die Rückkehr des Gaspedals in die Ruhelage anzeigt. Ebenso ist es möglich, eine extreme Stellung mit Hilfe eines kontinuierlich arbeitenden Stellungsgebers, beispielsweise in Form eines Potentiometers, zu erfassen.

In Verbindung mit dem Verfahren gemäß Patentanspruch 2 wird es damit möglich, durch mehrmaliges Einstellen des Fahrwunsch-Pedals in einer Vollast-Stellung innerhalb einer definierten, kurz bemessenen Zeitspanne den Ausgabe-Befehl auszulösen und den Zustand bzw. den oder die Fehler der Brennkraftmaschine oder des nachgeordneten Katalysators on-board zu signalisieren.

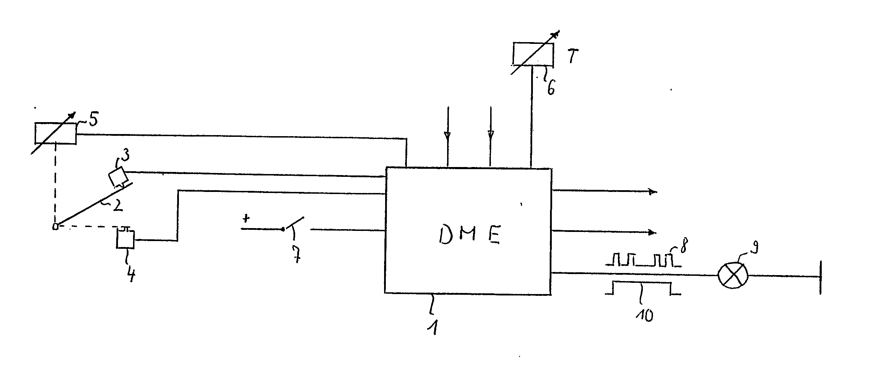

In der Zeichnung ist ein Ausführungsbeispiel der Erfindung dargestellt.

Eine schematisch dargestellte Schaltanordnung enthält als zentrales Element ein elektronisches Steuergerät (DME) für die Einstellung der Zündung und Einspritzung einer nicht dargestellten Brennkraftmaschine. Dem Steuergerät 1 sind als Steuersignale die Signale nicht dargestellter Geber, beispielsweise für Drehzahl, Außendruck und den atmosphärischen Luftdruck sowie für die Stellung eines Fahrwunsch-Pedals 2 zugeführt. Diese Stellung wird mit Hilfe eines Leerlauf-Schalters 3, eines Vollast-Schalters 4 sowie eines die Lage stetig erfassenden Drehpotentiometers 5 erfaßt. Ferner erhält das Steuergerät 1 das Ausgangssignal eines Temperaturgebers 6 für einen nicht dargestellten Abgas-Katalysator, der im Fehlerfalle eine deutlich über oder unter der normalen Betriebstemperatur liegende Temperatur des Katalysators anzeigt.

Das Steuergerät 1 liefert im normalen Betriebszustand des Kraftfahrzeugs, d. h. bei und nach dem Anlassen der Brennkraftmaschine sowie bei laufender Brennkraftmaschine Steuersignale für eine nicht dargestellte Einspritzanlage E sowie eine ebenfalls nicht dargestellte Zündanlage Z.

In einem anderen Betriebsfall liefert es ein optisches Codesignal, das für einen Fehler des Abgas-Katalysators relevant ist.

Hierzu wird ein anderer Betriebszustand der Brennkraftmaschine eingestellt. Dieser wird erreicht bei geschlossenem Zündschalter 7 und stehender Brennkraftmaschine, d. h. dem Signal des Drehzahlgebers von Null. Mit Hilfe des Fahrwunsch-Pedals 2 wird der Ausgabe-Befehl für dieses Codesignal eingegeben. Hierzu wird das Fahrwunsch-Pedal innerhalb einer vorgegebenen Zeit von beispielsweise zwei Sekunden fünfmal von der dargestellten Ruhelage in die strichlierte Vollast-Stellung gebracht und anschließend wieder in die Ruhelage zurückgestellt. Die Schalter 3 und 4 geben somit innerhalb von zwei Sekunden nacheinander fünfmal ein Schaltsignal an das Steuergerät 1 ab. Dieses gibt ein Codesignal 8 an eine im Combi-Instrument (nicht dargestellt) angeordnete Glühlampe 9 ab. Diese leuchtet im Rhythmus des Codesignals 8 und zeigt damit optisch codiert den vorliegenden Fehler an. Der Fahrzeugbenutzer hat somit die Möglichkeit, selbst und ohne weitere Hilfsmittel mit Hilfe der ihm routinemäßig zur Verfügung stehenden Einrichtung in Form des Fahrwunsch-Pedals 2 den Ausgabe-Befehl für das Codesignal einzugeben. Durch die Auslösebedingung für den Ausgabe-Befehl in Form der fünfmaligen Betätigung innerhalb von zwei Sekunden wird ein versehentliches Ausgeben des Codesignals mit Sicherheit vermieden.

Entsprechend ist es möglich, auch den fehlerfreien Zustand des überwachten Kraftfahrzeug-Teils mit Hilfe eines Dauersignals 10 zu signalisieren. Die Glühlampe 9 leuchtet damit ununterbrochen für eine vorgegebene Zeit von beispielsweise zwei Sekunden nach Eingabe des Ausgabe-Befehls in das Steuergerät 1 auf und zeigt somit den ordnungsgemäßen Zustand des Kraftfahrzeug-Teiles an.

## Ansprüche

1. Verfahren zur Ausgabe eines Codesignals für Kraftfahrzeug-Teile mittels einer Glühlampe im Sichtbereich des Fahrzeugbenutzers, die abhängig vom jeweiligen Fehler und gesteuert durch ein mit einem Ausgabe-Befehl beaufschlagten elektronischen Steuergerät für das Teil ein Codesignal abgibt, **dadurch gekennzeichnet,** daß dem elektronischen Steuergerät (1) der Ausgabe-Befehl mittels einer Einrichtung (2) mitgeteilt wird, die serienmäßig vorhanden und dem Steuergerät zugeordnet ist und die in einem vorgegebenen Betriebszustand des Kraftfahrzeugs keine Betriebsfunktion besitzt.

2. Verfahren nach Anspruch 1, dadurch gekennzeichnet, daß der Ausgabe-Befehl durch mehrmaliges gleichartiges Betätigen der Einrichtung (2) innerhalb einer vorgegebenen Zeit ausgelöst wird.

3. Vorrichtung zur Durchführung des Verfahrens nach Anspruch 1 oder 2, dadurch gekennzeichnet, daß der Ausgabe-Befehl durch das Fahrwunsch-Pedal (2) ausgelöst ist.

4. Vorrichtung nach Anspruch 3, dadurch gekennzeichnet, daß der Ausgabe-Befehl über das Fahrwunsch-Pedal (2) eingegeben ist, wenn dieses in einer Vollast-Stellung (4) steht.

5. Vorrichtung nach Anspruch 4, dadurch gekennzeichnet, daß die Vollast-Stellung durch einen Vollast-Schaltkontakt (4) bestimmt ist.

EP 0 364 973 A2